# EUROPÄISCHE PATENTSCHRIFT

(11) **EP 2 310 264 B1**
(45) Veröffentlichungstag und Bekanntmachung des Hinweises auf die Patenterteilung: **05.09.2012**
(21) Anmeldenummer: 09777557.1
(22) Anmeldetag: 30.07.2009
(51) Int. Cl.: B64D 11/06, B64D 13/00

(54) **SYSTEM ZUR GEZIELTEN LOKALEN LUFTBEFEUCHTUNG**
SYSTEM FOR TARGETED LOCAL AIR HUMIDIFICATION
SYSTÈME POUR L'HUMIDIFICATION LOCALE ET CIBLÉE DE L'AIR

(30) Priorität: 05.08.2008 DE 102008036425; 05.08.2008 US 86209
(43) Veröffentlichungstag der Anmeldung: 20.04.2011
(73) Patentinhaber: Airbus Operations GmbH, 21129 Hamburg (DE)
(72) Erfinder: SCHUMACHER, Christian, 22880 Wedel (DE); KULCKE, Walter, 22635 Jork (DE); THUDT, Karin, 82024 Taufkirchen (DE); SCHREIBER, Robert, 82166 Gräfelfing (DE)
(74) Vertreter: Katérle, Axel
(86) Internationale Anmeldenummer: PCT/EP2009/005535
(87) Internationale Veröffentlichungsnummer: WO 2010/015361

(56) Entgegenhaltungen:
- DE-A1-102004 024 615
- DE-A1-102005 029 226
- DE-A1-102006 031 361
- DE-A1-102006 041 030
- US-A- 5 037 585
- US-A- 5 944 284

## Beschreibung

Die Erfindung betrifft eine Vorrichtung zur Luftbefeuchtung in einem Flugzeug. Insbesondere betrifft die Erfindung eine modular aufgebaute Vorrichtung zur gezielten lokalen Luftbefeuchtung in einem Kabinenbereich eines Flugzeugs.

In typischen Flughöhen von Verkehrs- oder Transportflugzeugen sind Druck und Temperatur niedriger als für einen Kabinenbereich akzeptabel. Druckgesteuerte Kabinen mit globalen Klimasystemen gehören zum Stand der Technik. Durch eine auf die Temperaturanpassung beschränkte Klimatisierung des Kabinenbereichs kann die Luftfeuchtigkeit während des Flugs auf sehr geringe Werte von einigen wenigen Prozent relativer Luftfeuchtigkeit, beispielsweise 3-5 %, absinken. Der Komfort von mitfliegenden Personen, die sich längere Zeit in diesem trockenen Raumklima aufhalten, ist erheblich eingeschränkt, da die geringe Luftfeuchtigkeit als unangenehm empfunden wird.

Bekannte globale Klimatisierungssysteme erlauben neben der Temperatursteuerung eine Befeuchtung der gesamten Kabinenluft, so dass sich eine relative Luftfeuchtigkeit von beispielsweise 30-50 % einstellt. Dadurch kann ein angenehmeres Raumklima geschaffen und damit der Komfort an Bord erhöht werden.

Eine entsprechende Lösung ist in der Patentschrift US 5,595,690 beschrieben. Dort werden Membranplatten zur zentralen Befeuchtung vorgeschlagen. Da die benötigte Austauschfläche für eine zentralisierte Lösung entsprechend groß ist, hat sich die flache, ausgedehnte Bauweise als nachteilig bei der Integration in das Flugzeug erwiesen. Des Weiteren ist eine Befeuchtung der gesamten Kabinenluft mit einem erhöhten Energieaufwand und Wassertanks entsprechender Größe verbunden, weshalb die vorgeschlagene Lösung zu einem erhöhten Fluggewicht und erhöhtem Treibstoffverbrauch des Flugzeugs führt. Zudem trocknen die Membranmodule nach Abschalten des Systems, wobei es durch das Zusammenziehen der Membran beim Austrocknen zu erheblichen mechanischen Belastungen des Membranmodulrahmens kommt. Abhängig von der Art der Verbindung und Dichtung zwischen benachbarten Platten des Plattenmembranmoduls können Verformungen durch die mechanische Belastung zur Undichtigkeit des Moduls führen.

Ein weiterer Nachteil einer globalen oder zentralisierten Befeuchtung der Kabinenluft ist die Gefahr von unerwünschter Kondensation, insbesondere in der Nähe von im Flug relativ kalten Strukturteilen des Flugzeugs. Korrosion, Fehlfunktionen, Gewichtszunahme durch in der Isolation eingelagertes Wasser oder eine Verminderung von Isoliereigenschaften können Folge der Entstehung des Kondensats sein.

Es sind auch Lösungen zur lokalen Befeuchtung, beispielsweise aus der Offenlegungsschrift DE 10 2004 024 615 A1 bekannt. Dort werden Sprühverfahren zur lokalen Befeuchtung verwendet. Dadurch kann die Luftfeuchtigkeit gezielt in Teilbereichen der Kabine erhöht werden, ohne eine Kondensation an weiter entfernt liegenden, kühleren Isolations- und Strukturteilen des Flugzeugs zu verursachen. Nachteilig ist dagegen, dass durch die Sprühverfahren das einem zu befeuchtenden Luftstrom zugeführte Wasser zumindest zum großen Teil in flüssiger Form zugeführt wird. Dadurch wird Luft mit einer Vielzahl kleiner Flüssigkeitstropfen, d.h. Aerosolen, in die Kabine ausgestoßen. Die in die Kabine eintretenden Flüssigkeitstropfen werden von den Kabineninsassen regelmäßig als den Komfort beeinträchtigend empfunden. Ferner erhöht sich durch die Aerosole die Gefahr einer Übertragung von Keimen in der Atemluft.

Das Dokument DE 10 2005 029 226 A1 beschreibt eine Vorrichtung zum Zuführen eines Mehrkomponentenstrahls zu einem Gesichtsfeld eines Benutzers in Form eines Freistrahls. Der Freistrahl besteht aus einer Sauerstoffkomponente und einer Wasserkomponente, die als Zweiphasenfreistrahl vorliegen.

Das Dokument US 5,944,284 beschreibt die Anordnung einer Spraydose an der Rückseite eines Sitzes. Die Spraydose weist eine Spraydüse auf, durch die in herkömmlicherweise unter Druck stehende Aerosole abgegeben werden. Es sind keine Mittel zur Temperatursteuerung oder -beeinflussung vorgesehen.

Das Dokument DE 10 2006 041 030 A1 offenbart ein Luftfahrzeugkabinen-Klimatisierungssystem. Einzelne Sitze der Kabinenzone können mittels eines im Sitz integrierten Wärmetauschers gekühlt werden. In einer Ausführungsform strömt Luft in einer Sitzzuführungsleitung mittels eines Gebläses durch den Wärmetauscher, wo sie durch ein flüssiges Kühlmittel abgekühlt wird.

Das Dokument US 5,037,585 beschreibt eine Klimaanlage für ein Flugzeug, die heiße Luft zu einem Luftbefeuchter fördert. Der Luftbefeuchter "atomisiert" oder verdampft Wasser mittels eines Quarzkristalls oder durch Wechselstrom innerhalb des heißen Luftstroms.

Das Dokument DE 10 2006 031 361 A1 offenbart eine Sitzvorrichtung, um Patienten an Bord eines Flugzeugs während des Flugs notfallmedizinisch versorgen zu können. In einer Ausgestaltung des Flugzeugs ist mittels medizinischer Module ein Stromanschluss für medizinische Geräte, eine Sauerstoffversorgung für den Patienten und eine telemedizinische Einheit vorgesehen.

Aufgabe der vorliegenden Erfindung ist es, unter Einhaltung eines effizienten und sicheren Flugbetriebs einen hohen klimatischen Komfort für die an Bord befindlichen Personen zu gewährleisten.

Zur Lösung dieser Aufgabe ist erfindungsgemäß eine Vorrichtung zur Erhöhung der Luftfeuchtigkeit in einem mit einer Vielzahl Sitze ausgerüsteten Kabinenbereich eines Flugzeugs gemäß Anspruch 1 vorgesehen. Die Vorrichtung umfasst eine Vielzahl jeweils in räumlicher Zuordnung zu jeweils einer Teilzahl der Sitze angeordneter Befeuchtungseinheiten, welche jeweils dazu eingerichtet sind, einen zugeführten Luftstrom mit gasförmigem Wasser anzureichern. Weiter umfasst die Vorrichtung eine Vielzahl Auslassöffnungen, welche dazu eingerichtet sind, die von den Befeuchtungseinheiten angereicherten Luftströme in den Kabinenbereich abzugeben, wobei jeweils eine Teilzahl der Auslassöffnungen je einen der angereicherten Luftströme erhält.

Hierbei ist der Begriff "Sitz" allgemein im Sinne eines Aufenthaltsortes oder Durchgangsbereichs im Kabinenbereich zu verstehen. Beispielsweise kann der Aufenthaltsort eine Bar in einer Lounge umfassen.

Durch die mit gasförmigem Wasser angereicherten Luftströme wird eine Aerosolbildung auf ein für Kabineninsassen unmerkliches Maß begrenzt. Die mit Aerosolen verbundene Gefahr der Keimübertragung wird minimiert. Durch die Vielzahl Befeuchtungseinheiten, welche jeweils einer Teilzahl der Sitze zugeordnet sind, ist ein modularer Aufbau der Vorrichtung gegeben. Insbesondere kann der Bedarf an Befeuchtungseinheiten einem tatsächlichen Bedarf angepasst werden. Damit verbunden ist eine effiziente Nutzung des Fluggewichts und bordeigener Ressourcen, wie Wasser und Energie, und somit auch eine Reduktion des Treibstoffverbrauchs. Da jeweils eine Teilzahl der Auslassöffnungen je einen der von einer der Befeuchtungseinheiten angereicherten Luftströme erhält, können mehrere Untereinheiten autonom betrieben werden, wobei ein solcher paralleler Betrieb Flexibilität und Zuverlässigkeit gewährleisten kann.

Zumindest ein Teil der Befeuchtungseinheiten kann jeweils in oder an einem der Sitze angeordnet sein. Dies kann vorteilhaft für eine variable Gestaltung des Innenausbaus der Kabine sein, da bei einer Änderung der Sitzanordnung aufwendige Montageschritte für die Befeuchtungseinheiten entfallen.

Auch kann zumindest ein Teil der Auslassöffnungen an einem der Sitze oder in einer durch Konvektion einem der Sitze zugänglichen Umgebung angeordnet sein. Dadurch kann eine effiziente Verwendung der befeuchteten Luft zur Komfortsteigerung erreicht werden, während an entfernter liegenden Bauteilen des Flugzeugs eine geringere relative Luftfeuchtigkeit herrscht, so dass eine Gefahr einer Kondensation minimiert werden kann.

Vorzugsweise wird jeweils einer Teilzahl der Befeuchtungseinheiten je ein Wasserreservoir zugeordnet, aus welchem die betreffende Befeuchtungseinheit Wasser zur Anreicherung ihres Luftstroms beziehen kann. Durch eine dezentrale Wasserversorgung kann ein autonomer oder modularer Aufbau der Vorrichtung zur Erhöhung der Luftfeuchtigkeit auch hinsichtlich der Wasserversorgung erreicht werden.

Zumindest ein Teil dieser Wasserreservoire kann jeweils in oder an einem der Sitze, vorzugsweise entnehmbar, angeordnet sein. Dadurch kann die Flexibilität des modularen Aufbaus in vorteilhafter Weise erweitert werden. Weiterhin ist es vorteilhaft, ein entnehmbares Wasserreservoir beispielsweise als steril befüllte und / oder desinfizierbare Wasserflasche auszuführen. Das in die desinfizierbare Wasserflasche eingefüllte Wasser kann vor dem Befüllen desinfiziert werden. Dadurch kann eine aufwendige Wasseraufbereitung an Bord des Flugzeugs entfallen, und die Gefahr einer Ausbreitung von Keimen durch verunreinigtes Wasser minimiert werden. Eine bevorzugte Verwendung von entsalztem Wasser kann zudem eine Standzeit der Befeuchtungseinheiten erhöhen, da eine Ablagerung, beispielsweise von Kalk, erheblich gemindert und auch ein Wartungsaufwand reduziert werden kann. Durch eine lokale Wasserversorgung kann ferner der Anschluss an ein Flugzeugbordnetz für Frischwasser und gegebenenfalls auch Drainage entfallen. Außerdem kann ein Pumpen größerer Wassermengen durch das Flugzeug vermieden und ein damit einhergehendes Sicherheitsrisiko ausgeschlossen werden. Durch eine erhöhte Position des Wasserreservoirs ist es zudem möglich, einen Wassertransport von dem Wasserreservoir zur Befeuchtungseinheit durch die Schwerkraft zu gewährleisten, so dass auf eine Pumpe gänzlich verzichtet werden kann.

Ferner kann jeweils einer Teilzahl der Befeuchtungseinheiten je ein Gebläse zugeordnet sein, welches der Erzeugung des der betreffenden Befeuchtungseinheit zugeführten Luftstroms dient. Vorzugsweise ist auch zumindest ein Teil der Gebläse jeweils in oder an einem der Sitze angeordnet.

Hinsichtlich der Auslassöffnungen ist zumindest ein Teil derselben vorzugsweise individuell positionierbar, individuell ausrichtbar oder mit insbesondere gesteuerten Stellmitteln ausgestattet, welche die Position oder Ausrichtung zumindest einer der Auslassöffnungen automatisch einer Stellung einer Rückenlehne eines der Sitze anpassen. Dadurch kann sowohl der Komfort weiter erhöht werden als auch ein ressourceneffizienter Einsatz eines befeuchteten Luftstroms erreicht werden.

Die Vorrichtung zur Erhöhung der Luftfeuchtigkeit kann insbesondere Heizmittel zum Heizen des zugeführten Luftstroms, des angereicherten Luftstroms oder des zugeführten Wassers umfassen. Auch ein Zusammenwirken mehrerer Heizmittel zum Heizen einer oder mehrerer der vorgenannten Phasen ist denkbar. Dadurch kann neben der erhöhten Luftfeuchtigkeit ein hoher thermischer Komfort für die an Bord befindlichen Personen gewährleistet werden. Zudem ist es denkbar, Heizmittel zum Abtöten von Keimen im Wasser einzusetzen, um einer Ansteckungsgefahr vorzubeugen.

Durch den Einsatz von Sensormitteln kann eine oder eine Kombination der Größen Temperatur, Luftfeuchtigkeit, Durchflussrate, Druck und Sauerstoffanteil erfasst und eventuell durch Anzeigeinstrumente dargestellt werden. Insbesondere kann der zugeführte Luftstrom, der angereicherte Luftstrom, ein Luftstrom an einer der Auslassöffnungen, zugeführtes Wasser oder Luft in einer durch Konvektion einem der Sitze zugänglichen Umgebung messtechnisch erfasst werden.

Eine erste Steuereinheit kann dazu eingerichtet sein, wenigstens eine erfasste Größe mit wenigstens einer vorgegebenen Größe zu vergleichen. Im Falle einer Abweichung kann die erste Steuereinheit durch Regeln zumindest einer der Befeuchtungseinheiten und/oder durch Regeln der Heizmittel der Abweichung entgegensteuern. Dabei ist es denkbar, die Steuereinheit in räumlicher Zuordnung zu der betreffenden Befeuchtungseinheit anzuordnen. Insbesondere kann die erste Steuereinheit in zumindest einer Teilzahl der Sitze integriert sein. Ferner können Eingabemittel zur Eingabe der wenigstens einen vorgegebenen Größe an zumindest einer Teilzahl der Sitze angebracht sein.

Ferner kann die erste Steuereinheit zur Datenkommunikation mit einer gesonderten zweiten Steuereinheit ausgebildet sein. Die zweite Steuereinheit kann der Steuerung von Klimatisierungsmitteln zur Klimatisierung von in den Kabinenbereich eingeblasener Versorgungsluft dienen, wobei diese gegenüber den angereicherten Luftströmen eine gesonderte Luftversorgung darstellt. Die erste Steuereinheit kann dazu eingerichtet sein, die wenigstens eine erfasste Größe und/oder die wenigstens eine vorgegebene Größe an die zweite Steuereinheit zu übermitteln.

Ergänzend oder alternativ kann die erste Steuereinheit durch die Datenkommunikation von der zweiten Steuereinheit die Klimatisierung der Versorgungsluft betreffende Mess- und/oder Sollwerte erhalten. Ferner kann die erste Steuereinheit in Abhängigkeit der von der zweiten Steuereinheit erhaltenen Werte die wenigstens eine vorgegebene Größe korrigieren. Beispielsweise kann die wenigstens eine vorgegebene Größe für die erste Steuereinheit der zweiten Steuereinheit angeglichen werden. Dadurch kann beispielsweise verhindert werden, dass durch abweichende Vorgaben hinsichtlich Temperatur und/oder Luftfeuchtigkeit gesonderte Klimatisierungsmittel gegeneinander arbeiten. Das Angleichen kann dynamisch erfolgen, d.h. eine Reaktion der ersten Steuereinheit fällt für größere Abweichungen starker aus als für kleine.

Auch kann daran gedacht werden, dass die zweite Steuereinheit auf Grundlage der übermittelten wenigstens einen erfassten und/oder vorgegebenen Größe ihren Sollwert korrigiert. Die genannten Korrekturen können vorteilhafterweise zur Erhöhung der Energieeffizienz führen.

Stromabwärts der Befeuchtungseinheit kann eine Verdunstungsstrecke vorgesehen sein. Die Verdunstungsstrecke kann eine S-Geometrie, Heizmittel, Mischeinbauten, Verwirbelungsflächen oder Abscheideflächen aufweisen, die einem Auflösen oder Abscheiden von etwaigen Aerosolteilchen dienen. Durch die Reduktion von Aerosolteilchen in der ausgestoßenen Luft kann der Flugkomfort weiter verbessert werden oder einer Keimbildung vorgebeugt werden.

In zumindest einem Teil der Befeuchtungseinheiten kann das gasförmige Wasser durch folgende Mittel bereitgestellt werden: ein Membranmodul, vorzugsweise ein Hohlfasermembranmodul; ein Pad-Verdunster; ein elektrisch, durch Trimmluft oder Zapfluft beheizter Verdampfer, vorzugsweise mit einer Verdampferplatte; und ein Ultraschallverdunster. Ein Membranmodul kann vorteilhafterweise eingesetzt werden, um durch Betriebstemperaturen deutlich unterhalb des Siedepunkts, beispielsweise im Bereich von 20-40°C, eine Verbrühungsgefahr auszuschließen. Allgemein sind unter Sicherheitsaspekten Befeuchtungsmittel mit einer niedrigeren Temperatur im zugeführten Luftstrom der Befeuchtungseinheit vorteilhaft. Beispielsweise solche Befeuchtungsmittel, die eine einer Verdampfungsenthalpie entsprechende Wärme dem Wasser statt einem Luftstrom zuführen. Der Einsatz eines Pad-Verdunsters oder eines beheizten Verdampfers kann durch die höhere Betriebstemperatur vorteilhaft zur Keimabtötung verwendet werden. Ein Ultraschallverdunster kann zum Erreichen einer höheren Energieeffizienz eingesetzt werden und bei entsprechender Frequenzwahl eine keimabtötende Wirkung haben.

Die Vorrichtung zur Erhöhung der Luftfeuchtigkeit kann des Weiteren eine Sauerstoffquelle und eine stromabwärts zumindest eines Teils der Befeuchtungseinheiten angeordnete Einlassöffnung aufweisen. Durch die Einlassöffnung kann in den zugeführten Luftstrom Sauerstoff oder sauerstoffangereicherte Luft aus der Sauerstoffquelle eingeblasen werden. Dadurch kann der im Flug typischerweise einer geostatischen Höhe von ca. 2000 m entsprechende Sauerstoffpartialdruck erhöht werden, beispielsweise bis zum Erreichen eines Sauerstoffpartialdrucks entsprechend Meereshöhe. Dies kann das Wohlbefinden, insbesondere von Personen mit verringerter Fähigkeit zur Sauerstoffaufnahme, verbessern. Zudem kann durch die gezielte Luftzufuhr eine effiziente Verwendung der Sauerstoffquelle stattfinden.

Diese und andere Merkmale einer Vorrichtung zur Erhöhung der Luftfeuchtigkeit werden in der folgenden Beschreibung von Ausführungsformen zum Zweck der Verdeutlichung und ohne Einschränkung des erfinderischen Gedankens näher erläutert. Es zeigen:
- Fig. 1: eine schematische Draufsicht einer Sitzanordnung in der "ersten Klasse" eines Flugzeugs mit zwei Ausführungsformen einer Vorrichtung zur Erhöhung der Luftfeuchtigkeit; und
- Fig. 2: eine detailliertere, auf einen Sitzplatz beschränkte schematische Darstellung einer weiteren Ausführungsform einer Vorrichtung zur Erhöhung der Luftfeuchtigkeit.

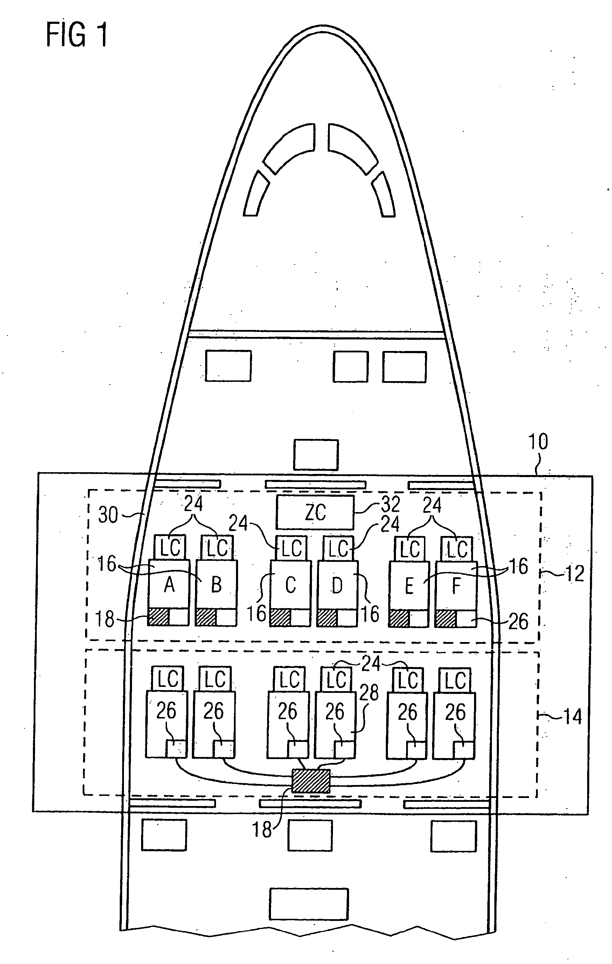

Fig. 1 zeigt einen allgemein mit 10 bezeichneten Kabinenabschnitt, der als "erste Klasse" in einem Flugzeug konfiguriert ist. Der Kabinenabschnitt 10 weist im gezeigten Beispielfall zwei Sitzreihen auf. Für die erste Sitzreihe ist eine erste Ausführungsform 12 der Vorrichtung zur Erhöhung der Luftfeuchtigkeit gezeigt. Eine alternative Ausführungsform 14 ist für die zweite Sitzreihe realisiert. Den Sitzen 16 der ersten Reihe ist jeweils eine lokale Wasserquelle 18 zugeordnet. In Hand-Reichweite jedes Sitzes ist ein Anzeige- und Eingabeinstrument 20 angebracht, welches mit einer lokalen Steuereinheit 22 verbunden ist. In den dargestellten Ausführungsbeispielen 12 und 14 ist das Anzeige- und Eingabeinstrument 20 mit der Steuereinheit 22 in einer integrierten Steuereinheit 24 zusammengefasst. In den Sitzen 16 ist des Weiteren eine Befeuchtungseinheit 26 integriert. Während die Sitze 28 der zweiten Reihe ebenfalls eine integrierte Befeuchtungseinheit 26 aufweisen, ist deren Versorgung durch eine zentrale Wasserquelle 18 für die gesamte zweite Reihe 14 zusammengefasst.

Während die Befeuchtungseinheiten 26 und lokalen Steuerungen 22 für eine lokale und individuelle Klimatisierung vorgesehen sind, ist weiterhin ein globales Klimatisierungssystem (nicht gezeigt) zur Klimatisierung des gesamten Kabinenabschnitts 10 vorhanden. Durch dieses wird ein separater Versorgungsluftstrom entlang der Seitenwände 30 eingeblasen. Eine Zonensteuereinheit 32 ist zur Regelung des globalen Klimatisierungssystems des Kabinenabschnitts 10 vorgesehen. Die Zonensteuereinheit 32 ist mit Temperatur- und Luftfeuchtigkeitssensoren (nicht gezeigt) zur Erfassung durchschnittlicher Klimagrößen im Kabinenabschnitt 10 verbunden.

Die Wasserquellen 18 sind für einen Wasserverbrauch dimensioniert, der durch die Befeuchtungseinheiten 26 während eines Langstreckenfluges anfällt. Berechnungen zeigen, dass für einen Langstreckenflug (von ca. 15 Stunden) die individuellen Wasserquellen 18 an den Sitzplätzen 16 der ersten Reihe 12 ein Fassungsvermögen von drei Liter aufweisen sollten. Ein entsprechendes vielfaches Fassungsvermögen besitzt die zentrale Wasserquelle 18 der zweiten Sitzreihe 14. Der tatsächliche Wasserbedarf variiert auch in Abhängigkeit von einer Grundfeuchte im Kabinenbereich 10.

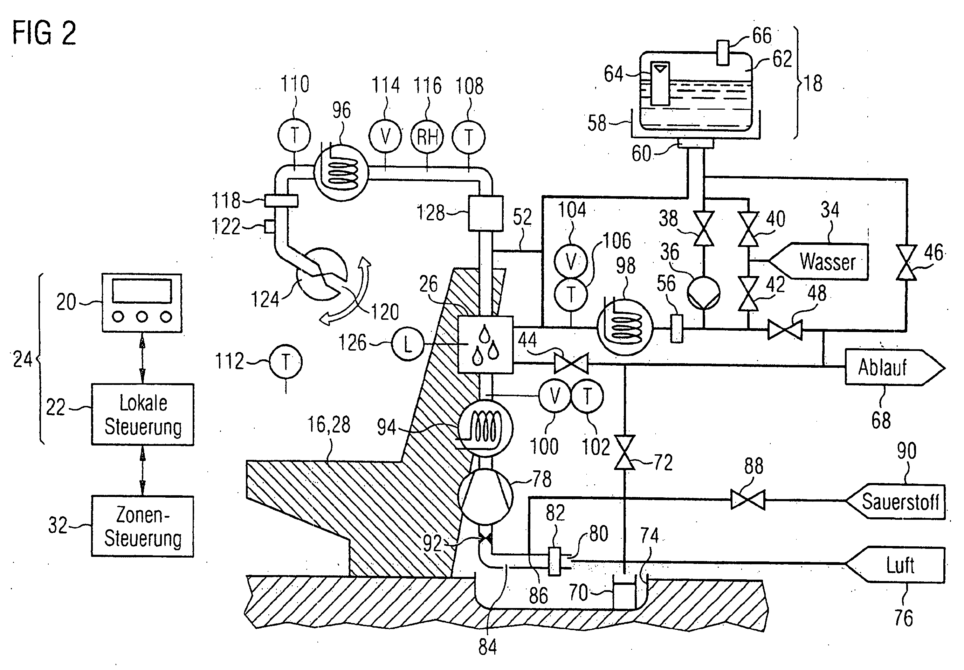

Fig. 2 zeigt in einer schematischen Darstellung einzelne Komponenten, die für verschiedene weitere Ausführungsformen vollständig oder teilweise realisiert oder kombiniert werden können.

In einer Ausführungsform, wie sie der ersten Sitzreihe 12 entspricht, ist die in Fig. 2 gezeigte lokale Wasserquelle 18 am Sitz 16 angebracht. Im Fall der zweiten Sitzreihe 14 wird das Wasser durch die mit Bezugszeichen 34 gekennzeichnete externe Wasserquelle an den Sitz 28 gefördert. Das Wasser wird durch eine Druckdifferenz in der externen Wasserquelle 34, durch die Schwerkraft einer über Kopf angeordneten lokalen Wasserquelle 18 oder eine Pumpe 36 zu der Befeuchtungseinheit 26 gefördert.

Je nach verwendeter Befeuchtungseinheit kann das Wasser kontinuierlich oder diskontinuierlich unter Einsatz der Pumpe 36 und der Ventile 38, 40 oder 42 dosiert werden. Durch Schließen des Ventils 48 ist ferner bei geöffneten Ventilen 44 und 46 ein Zirkulationsbetrieb möglich, bei dem die Pumpe 36 Wasser kontinuierlich durch die Befeuchtungseinheit 26, gegebenenfalls auch durch die lokale Wasserquelle 18, fördert. D.h. das Wasser zirkuliert. Die lokale Wasserquelle 18 ist zum Druckausgleich über Leitungen 52 mit der Luftleitung 54 und der Befeuchtungseinheit 26 verbunden.

Eine Konditionierungskomponente 56 ist stromaufwärts des Befeuchtungssystems 26 zur Aufbereitung des zugeführten Wassers angeordnet. In einer einfachen Ausführungsform ist ein Filter in die Konditionierungskomponente 56 eingesetzt. In einer weiteren Ausführungsform umfasst die Konditionierungskomponente 56 einen Ionentauscher oder Membranen zur Umkehrosmose, welche der Enthärtung des Wassers dienen. Zur Desinfektion bestimmter Komponenten des Befeuchtungssystems sind Desinfektionsmittel, beispielsweise Silberionen zur Desinfektion von Luftleitungen und Aerosolfiltern, in der Konditionierungskomponente 56 enthalten. In einer vollumfänglichen Ausführungsform weist die Konditionierungskomponente 56 eine Lichtquelle im ultravioletten Spektralbereich auf, welche auf das durchfließende Wasser gerichtet ist, um eventuell darin enthaltene Krankheitserreger abzutöten. Schließlich besitzt die Konditionierungseinheit 56 eine Fassung (nicht dargestellt) zur Aufnahme kleinerer Gefäße mit Aromatisierungsstoffen, welche dem vorbeiströmenden Wasser zugesetzt werden.

Die lokale Wasserquelle 18 umfasst eine Halterung 58 mit einer an deren Boden befindlichen Kupplung 60. Ein Wassertank 62 mit einer Auslassöffnung greift in die Kupplung 60 ein, wenn der Wassertank 62 in die Halterung 58 eingesetzt wird. Die Kupplung 60 ermöglicht ein schnelles Wechseln des Wassertanks 62 im Vorfeld eines Flugs. Die Auslassöffnung des Wassertanks besitzt ein Verschlusselement (nicht gezeigt), welches durch Einsetzen in die Kupplung 60 automatisch in eine geöffnete Stellung bewegt wird und sich beim Entnehmen selbständig wieder verschließt. Der Wassertank 62 weist einen Sichtstreifen 64 auf, durch den der Füllstand abgelesen werden kann. In einer weiteren Ausführungsform ist ein Schwimmer als Füllstandsmesser 64 im Wassertank integriert, dessen Höhe mechanisch oder induktiv erfasst und durch ein dem Flugbegleitpersonal zugängliches Anzeigeinstrument (nicht gezeigt) dargestellt wird.

Eine bevorzugte Ausführungsform des Wassertanks enthält steriles Wasser und ist durch eine Versiegelung an der Auslassöffnung luftdicht verschlossen, wobei die Versiegelung durch das Kupplungsstück 60 beim Einsetzen des Wassertanks 62 in die Halterung 58 aufgebrochen wird. Eine alternative Ausführungsform weist eine Öffnung 66 zum Nachfüllen des Wassertanks 62 auf.

Im Wasser gelöste Salze verringern eine Verdunstungsrate. Deshalb sollte entsalztes Wasser eingesetzt werden. Dadurch wird auch eine Aufkonzentrierung vermieden, welche regelmäßig einen Reinigungsgang erforderlich machen würde, bei dem je nach Verfahren bis zu 30 % des Wassers verworfen werden müsste. Dies würde zudem eine Drainage erfordern, was wiederum einen Anschluss an ein Bord-Drainagesystem nötig machen könnte. Auch deshalb sollte zugunsten der Modularität und zur Reduktion eines Wartungsaufwands entsalztes Wasser eingesetzt werden.

Durch Öffnen des Ventils 40 und Schließen des Ventils 38 kann der Wassertank 62 auch durch die externe Wasserquelle 34, beispielsweise ein Frischwassersystem des Flugzeugs, im in die Halterung 58 eingebauten Zustand befüllt werden.

Die externe Wasserquelle 34 kann, wie im Ausführungsbeispiel der zweiten Reihe 14 in Fig. 1 gezeigt, durch eine gemeinsame Quelle 18 gespeist werden. Alternativ ist ein Anschluss an das vorgenannte Frischwassersystem des Flugzeugs realisiert. Des Weiteren ist es vorteilhaft, im Falle einer an Bord befindlichen Wasserstoff-Brennstoffzelle zur Erzeugung elektrischer Energie, dass bei der Stromerzeugung anfallende Wasser als externe Wasserquelle 34 einzusetzen. Schließlich ist ein Kondensat, welches sich aus der Kabinenluft an einem Abscheider (nicht gezeigt) niederschlägt, eine weitere externe Quelle 34 für das Befeuchtungssystem.

Ein Ablauf 68 ist vorgesehen, um Abwasser oder überschüssiges Wasser aus dem Befeuchtungssystem abzuleiten. Durch den Ablauf 68 wird überschüssiges Wasser aus dem Wassertank 62 durch Öffnen des Ventils 64 entleert. Entsprechend wird auch durch Öffnen des Ventils 48 bei geschlossenen Ventilen 38 und 42 Wasser aus der Konditionierungskomponente 56 abgeleitet, beispielsweise zum Trocknen und Sterilisieren der Konditionierungskomponente 56. Abwasser aus der Befeuchtungseinheit 26 kann durch das geöffnete Ventil 44 ebenfalls abgegeben werden.

In einer alternativen Ausführungsform ist ein Auffangbehälter 70, wie in Fig. 2 gezeigt, am Kabinenboden angebracht, um im geöffneten Zustand eines Ventils 72 eine Drainagefunktion zu erfüllen. Ein Auffangbecken 74 umfasst den Auffangbehälter 70, um im Falle eines Überlaufens des Auffangbehälters 70, einer Fehlfunktion oder einer Leckage des Befeuchtungssystems austretendes Wasser aufzunehmen. Um das Wasser zu binden, ist zumindest der Auffangbehälter 70 mit einem saugfähigen Material ausgestattet.

Der zu befeuchtende Luftstrom wird in einem ersten Ausführungsbeispiel von einer in Fig. 2 unter Bezugszeichen 76 symbolisch dargestellten separaten Flugzeugklimaanlage bereitgestellt. In einer alternativen Ausführungsform ist ein Gebläse 78 am Sitz 16 und 28 angebracht, um durch eine Ansaugöffnung 80 Kabinenluft in das Befeuchtungssystem zu fördern.

Ein Luftfilter 82 reinigt die in die lokale Befeuchtungsanlage strömende Luft von Schwebepartikeln, um eine Verschmutzung des Befeuchtungssystems zu verhindern und damit sowohl den Wartungsaufwand, als auch das Risiko einer Verkeimung des Befeuchtungssystems zu verringern. Der Luftfilter 82 ist vorzugsweise ein HEPA-Filter (für englisch: High Efficiency Particulate Airfilter) zur Filterung von Schwebstoffen. Kondensiertes Wasser, das auf der Luftseite des Befeuchtungssystems anfallen kann, wird durch Drainagelöcher 84 in das Auffangbecken 74 geleitet.

Fig. 2 zeigt eine Einlassöffnung 86, durch die bei geöffnetem Ventil 88 Sauerstoff oder sauerstoffangereicherte Luft aus einer Sauerstoffquelle 90 in den zugeführten Luftstrom eingeblasen wird. Dies erhöht den Sauerstoffgehalt der lokal eingeblasenen Luft im Atembereich von Passagieren zur Komforterhöhung oder, vorzugsweise, aus medizinischen Gründen. Beispielsweise wird eine Sauerstoffkonzentration eingestellt, die im Atembereich der Sauerstoffkonzentration auf Meeresniveau entspricht. Die Einlassöffnung 86 ist vorteilhafter Weise stromaufwärts der Befeuchtungseinheit 26 angeordnet, da ein Zumischen stromabwärts der Befeuchtungseinheit 26 die relative Luftfeuchtigkeit des befeuchteten Luftstroms beeinflussen würde. Vorzugsweise ist die Einlassöffnung 86 mit einem Anschluss versehen, der kompatibel zu standardisierten medizinischen Anschlüssen für Sauerstoff ist.

Gemäß einer weiteren Ausführungsform ist ein Sitzplatz mit vorgenannter Sauerstoffanreicherung speziell für einen Krankentransport ausgelegt und weist neben einem Sauerstoffanschluss standardisierte Anschlüsse für eine Stromversorgung von medizinischen Geräten auf.

Für die in Fig. 2 schematisch gezeigte Sauerstoffquelle 90 werden Druckbehälter oder vorzugsweise zur Meidung des Gefahrenpotentials eines Druckbehälters chemische Sauerstoffgeneratoren eingesetzt. In einer weiteren Ausführungsform, welche ein System zur Treibstofftankinertisierung umfasst, wird die bei der Erzeugung eines in den Tank eingeleiteten Schutzgases anfallende, sauerstoffangereicherte Luft als Quelle 90 eingesetzt.

Eine austauschbare oder variable Blende 92 ist, wie in Fig. 2 gezeigt, im Querschnitt einer Zuluftleitung eingesetzt. Die benötigte Luftmenge zur lokalen Befeuchtung hängt von den Luftströmungen in der Kabine und variiert somit für verschiedene Sitzpositionen in der Kabine. Durch die Blende 92 wird der Luftstrom der Sitzposition in der Kabine angepasst. In einer erweiterten Ausführungsform wird die variable Blende in Abhängigkeit eines Sauerstoffpartialdrucks gesteuert, beispielsweise durch die lokale Steuerung 22, da dieser mit der Flughöhe und der Anzahl an Passagieren variiert. Dabei berücksichtigt die Steuerung 22 Höchstwerte für die Sauerstoffkonzentration, so dass brandfördernde Sauerstoffkonzentrationen ausgeschlossen werden.

Unabhängig von der detaillierten Ausgestaltung des Befeuchtungssystems 26 muss zur Anreicherung der zugeführten Luft mit gasförmigem Wasser die zur Verdunstung von flüssigem Wasser nötige Verdampfungsenthalpie aufgebracht werden. Die in Fig. 2 schematisch dargestellte Ausführungsform sieht hierzu einen Heizer 94 im Zuluftstrom, einen Heizer 96 im Abluftstrom und einen Heizer 98 im Wasserzulauf vor. In einer alternativen Ausführungsbeispiel ist der Heizer statt am Wasserzulauf am Wasserreservoir 18 angebracht. Wie nachfolgenden Erläuterungen der Befeuchtungseinheit 26 zu entnehmen ist, verzichten vereinfachte Ausführungsformen auf einzelne Heizer.

Der der Befeuchtungseinheit 26 zugeführte Luftstrom wird hinsichtlich seiner Durchflussrate durch den Durchflusssensor 100, und hinsichtlich seiner Temperatur durch den Temperatursensor 102 erfasst. Ebenso werden Durchflussrate und Temperatur des Wasserzulaufs vor der Befeuchtungseinheit 26 durch die Sensoren 104 und 106 erfasst. Zwei weitere Temperatursensoren 108 und 110 sind jeweils vor und nach dem Abluftstrom-Heizer 96 angebracht. Schließlich ist ein Temperatursensor 112 in einem Zielbereich der lokalen Luftbefeuchtung angeordnet, um die lokale Temperatur im Bereich des Sitzes 16 bzw. 28 zu erfassen. Stromabwärts der Befeuchtungseinheit 26 sind des Weiteren ein Luftdurchflusssensor 114 und ein Luftfeuchtigkeitssensor 116 zur Bestimmung der relativen Luftfeuchtigkeit vorgesehen. Ein Teil der Signale der Sensoren 100 bis 116 werden durch entsprechende Verkabelungen an die lokale Steuereinheit 22 weitergeleitet. Ein Teil der Temperatur- und Durchflusssensoren dient nicht der kontinuierlichen Regelung, sondern um den Betrieb von Heizern und Befeuchtungseinheiten zu blockieren, falls kein ausreichender Durchfluss besteht. Damit wird eine Wasseransammlung und eine Überhitzung ausgeschlossen. Die lokale Temperatur 112 wird erfasst, um die Lufttemperatur der befeuchteten Luft 110 entsprechend einzustellen und sicherzugehen, dass der Taupunkt nicht unterschritten wird. Entsprechende Sättigungskurven sind hierzu in der Steuereinheit 22 tabelliert.

In einer alternativen Ausführungsform werden Steuerfunktionen für den Betrieb der Befeuchtungseinheit 26 von einer in der Befeuchtungseinheit 26 integrierten Befeuchtungssteuerung (nicht gezeigt) übernommen. In einer reduzierten Ausführungsform wird auf einzelne Durchflusssensoren verzichtet, indem einstellbare Blenden in den Querschnitten angebracht und vorjustiert sind.

Die befeuchtete Luft passiert einen Abscheider 118 der flüssiges Wasser (insbesondere wahrnehmbare Tropengrößen, einschließlich Wasserdampf) zurückhält. Dadurch wird gewährleistet, dass schließlich durch eine Auslassöffnung 120 nur die befeuchtete Luft in den Kabinenbereich entweicht. Vor der Auslassöffnung 120 ist ferner ein durch den Passagier manuell betätigbares Verschlusselement 122 angebracht, wodurch der Luftauslass auf Wunsch vollständig verschlossen werden kann. Aus Komfortgründen wird vorzugsweise eine Auslassgeometrie der Auslassöffnung 120 gewählt, die geringe Luftströmungsgeschwindigkeiten und geringe Turbulenzen erzeugt.

Durch ein Gelenk 124 ist die Auslassöffnung 122 durch den Passagier manuell ausrichtbar. In einer weiteren Ausführungsform ist darüber hinaus die Position der Auslassöffnung entlang einer Schiene (nicht gezeigt) in einer über dem Sitz 16 bzw. 28 befindlichen Deckenverkleidung beweglich gelagert. In einer weiteren Ausführungsform sind elektromechanische oder hydraulische Stellmechanismen vorgesehen, die am Gelenk 124 angreifen, um die Ausrichtung der Auslassöffnung 120 einer Position der Rückenlehne des Sitzes 16 bzw. 28 automatisch anzupassen. Die Anpassung wird über eine mechanische oder hydraulische Kupplung oder eine elektronische Steuerung (nicht gezeigt) erreicht. In der vorgenannten Ausführungsform, die eine Positionierung der Auslassöffnung 120 entlang der Schiene vorsieht, sind die Stellmechanismen zur Anpassung der Positionierung der Auslassöffnung 120 entlang der Schiene hinter der Deckenverkleidung installiert.

Zentrales Element des in Fig. 2 dargestellten Befeuchtungssystems ist die Befeuchtungseinheit 26. Wie zuvor dargestellt, wird der Befeuchtungseinheit 26 flüssiges Wasser und ein zu befeuchtender Luftstrom zugeführt. Bevorzugter Weise ist die Befeuchtungseinheit 26 mit einem Flüssigkeitssensor versehen, der Informationen über eine Wassermenge in der Befeuchtungseinheit 26 erfasst und an die lokale Steuereinheit 22 sendet. Aufgrund der Bedeutung der Befeuchtungseinheit 26 für das Befeuchtungssystem werden im Folgenden fünf Ausführungsformen der Befeuchtungseinheit 26 näher erläutert.

Gemäß einer ersten Ausführungsform ist in der Befeuchtungseinheit 26 ein Membranmodul mit Membranen aus einem für flüssiges Wasser impermeablen, aber für gasförmiges Wasser permeablen Materials vorgesehen. Das Membranmodul besitzt mehrere Membranfasern, welche hohl sind, so dass die Fasern in Längsrichtung von dem zugeführten, flüssigen Wasser durchströmt werden können. Das Innere der Hohlfasermembranen definiert ein erstes Volumen und der Außenraum der Hohlfasermembranen ein zweites Volumen des Membranmoduls. In dem Membranmodul sind die Hohlfasermembranen im Wesentlichen parallel und ohne Vorspannung in dem zweiten Volumen eingefasst. Für eine Darstellung wird auf die (einzige) Figur der Patentschrift US 4,098,852 verwiesen. Infolge des Durchströmens der Hohlfasermembranen, dehnen diese sich im Wesentlichen entlang ihrer Längsrichtung aus. Da die Hohlfasermembranen an ihren Enden in dem zweiten Volumen fest eingefasst sind, kommt es durch die Ausdehnung zu einer leichten Krümmung der Hohlfasermembranen innerhalb des zweiten Volumens, ohne dass dadurch deren Funktion dadurch beeinträchtigt wird. In einem späteren, abgetrockneten Zustand kehren die Hohlfasermembranen reversibel in den ursprünglichen Zustand zurück, wodurch zu keinem Zeitpunkt mechanische Spannungen auf das Membranmodul übertragen werden. Dies wirkt sich vorteilhaft auf die Standzeit, insbesondere gegenüber Plattenmembranmodulen aus.

Die Hohlfasermembranen trennen mit ihren zylindrischen Wänden das erste und zweite Volumen, so dass ein Stofftransport von einem in das andere nur durch das feinporöse Membranmaterial möglich ist. Im vorstehend beschriebenen Ausführungsbeispiel diffundiert ein Anteil des die Hohlfasern durchströmenden Wassers von dem ersten Volumen in das zweite Volumen. Dadurch wird im zweiten Volumen eine mit Wasser angereicherte Luftphase gewonnen. In einem zweiten bevorzugten Ausführungsbeispiel des Hohlfasermembranmoduls wird das zweite, äußere Volumen des Membranmoduls mit Wasser befüllt, während die zu befeuchtende Luft das erste, innere Volumen der Hohlfasermembranen axial durchströmt.

Der Membranbefeuchter kann entweder so betrieben werden, dass im Wesentlichen nur die durch den Phasenübergang in die anzureichernde Luft übertragene Wassermenge ersetzt wird (sogenanntes "Dead-End"-Verfahren), oder aber indem durch die Pumpe 36 Wasser zirkulierend durch die Hohlfasermembranen gepumpt wird (sogenannter "Cross-flow"-Verfahren). Mit der letzten Variante lassen sich höhere Standzeiten der Membran und eine bessere Befeuchtungsleistung erreichen. Ein Grund hierfür ist, dass durch das an den Membranwänden vorbeifließende Wasser eine Ablagerung von Schwebepartikeln, und damit eine rasche Verblockung der porösen Membranwand verhindert wird.

Vorteilhafter Weise verhindert der selektive Stofftransport des Wassers durch die Membran auch, dass Mikroorganismen, gelöste Feststoffe oder andere Verunreinigungen des Wassers in den Luftstrom übertreten. Ein Bewuchs der Hohlfasermembranflächen mit Mikroorganismen wird durch vollständiges Trocknen der Membran, bevorzugt gegen Ende des Fluges, erreicht.

Die Verdunstungsrate der Befeuchtungseinheit mit Hohlfasermembranen hängt von den Temperaturen des zugeführten Wassers und des Luftstroms, sowie der Druckdifferenz zwischen dem flüssigen Wasser und der Luftphase ab. Solange die Lufttemperatur die Wassertemperatur nicht unterschreitet, wird nur gasförmiges Wasser im Membranmodul in die Luft gelangen. Eine aufwendige Regelung, welche in Abhängigkeit der gewünschten relativen Luftfeuchtigkeit die umgesetzte Wassermenge mit der Durchflussrate des zu befeuchtenden Luftstroms abgleicht, kann deshalb in einer vereinfachten Ausführungsform entfallen. Aufgrund der Hohlfasermembranen ist die Anzahl an Aerosolteilchen im befeuchteten Luftstrom bereits so gering, dass auf eine in Fig. 2 gezeigte integrierte Verdunstungsstrecke 126 und eine externe Verdunstungsstrecke 128 stromabwärts der Befeuchtungseinheit 26 verzichtet werden kann.

Ein bemerkenswerter Vorzug des Membranmoduls ist seine niedrige Betriebstemperatur. Wie zuvor in Zusammenhang mit den Heizern erwähnt wurde, muss proportional zu der in die Gasphase umgesetzten Wassermenge die Verdampfungsenthalpie Δ*H* aufgebracht werden. Diese entspricht einer Temperaturänderung Δ*T* = Δ*H*/*C*, wobei *C* die Wärmekapazität derjenigen Phase ist, welcher die Verdampfungsenthalpie entzogen wird. Im Fall des Membranmoduls ist dies die, vorzugsweise im "Cross-flow"-Verfahren zirkulierende Wärmekapazität des flüssigen Wassers *C*=*C*_{Wasser}.Dagegen ist bei einer durch Heizluft betriebenen Befeuchtungseinheit *C*=*C*_{Luft} die Wärmekapazität der Luft. Da *C*_{Luft} << *C*_{Wasser}, ist die Temperaturänderung Δ*T*_{Wasser} des Wassers erheblich kleiner als die der Luft: Δ*T*_{Luft} » Δ*T*_{Wasser}. Tatsächlich kann bei Rezirkulation ("Cross-flow"-Verfahren) eine Aufheizung des Wasser um nur Δ*T*_{Wasser} = 3°C ausreichen. Dementsprechend liegt auch die Betriebstemperatur des Membranmoduls zwischen 20° und 70°C, vorzugsweise nur zwischen 20° und 40°C. Die tatsächlichen Temperaturen hängen stark von einer Eingangs- und Ausgangsfeuchte ab. Dazu kommt die Durchflussrate des Wassers bei rezirkulierenden Systemen. Im Vergleich dazu ergeben Schätzungen unter realistische Annahmen für ein auf Luftvorheizung basierendes Befeuchtungssystem eine Lufttemperatur von ca. 70°C.

Eine zweite Ausführungsform der Befeuchtungseinheit 26 setzt einen Verdampfer ein, in dem ein Wasservorrat über den Siedepunkt erhitzt wird und der entstehende Wasserdampf in den zu befeuchtenden Luftstrom eingeleitet wird. Der Verdampferbehälter besitzt ein Volumen, das elektrisch oder durch Wärmeübergang von Zapfluft oder Trimmluft beheizt wird. In diesen Verdampfungsbehälter wird das zugeführte flüssige Wasser eingeleitet. Um eine gleichmäßige Verteilung des Dampfes in der zu befeuchtenden Luft zu erreichen, wird der Wasserdampf durch eine Düse mit der trockenen Zuluft vermischt. Der Verdampfer wird so geregelt, dass es nicht zu einer Kondensation durch Übersättigung des zu befeuchtenden Luftstroms kommt. Dadurch kann auf eine Verdunstungsstrecke verzichtet werden.

Durch den Einsatz des Verdampfers wird verhindert, dass Mikroorganismen, gelöste Feststoffe oder andere Verunreinigungen des Wassers in den befeuchteten Luftstrom gelangen. Da das Wasser dem Luftstrom bereits gasförmig zugeführt wird, ist keine Verdunstungsstrecke erforderlich. Außerdem kann in einer vereinfachten Ausführungsform auf eine zusätzliche Beheizung des befeuchteten Luftstroms durch den Heizer 96 verzichtet werden. Dies ermöglicht ein platzsparendes Gesamtsystem.

Eine dritte Ausführungsform der Befeuchtungseinheit 26 umfasst eine Verdampferplatte, wobei das zugeführte flüssige Wasser auf die beheizte Oberfläche der Verdampferplatte getropft wird und dort verdampft, um in gasförmigem Zustand dem zu befeuchtenden Luftstrom zugeführt wird. Die Verdampferplatte wird bevorzugt elektrisch, in alternativen Ausführungsformen durch Zapfluft oder Trimmluft beheizt.

Analog zu der vorgenannten Ausführungsform eines Verdampfers wird der durch die Verdampferplatte bereitgestellte Gasphase des Wassers durch eine Düse mit der trockenen Luft vermischt. Die genannten Vorteile hinsichtlich der Abtötung von Mikroorganismen und dem Zurückhalten anderer Verunreinigungen des Wassers treffen für die Ausführungsform mit einer Verdampferplatte, wie zuvor für den Verdampfer genannt, zu. Des Weiteren kann auch hier auf eine Verdunstungsstrecke und auf ein Beheizen des befeuchteten Luftstroms verzichtet werden, was ein platzsparendes Gesamtsystem ergibt.

Eine vierte Ausführungsform der Befeuchtungseinheit 26 setzt einen Pad-Verdunster ein. Ein solches Pad ist beispielsweise durch eine schwammartige Silikat-Faserstruktur gegeben. In diese wird die zu befeuchtende und mittels des Heizers 94 auf ca. 70 bis 80 °C vorgeheizte Luft geleitet. Die Luft durchströmt das faserartige Pad, in welchem das zugeführte Wasser durch Kapillarwirkung an der Gesamtoberfläche der Fasern großflächig haftet, um effektiv in die durchströmte Luft als gasförmiges Wasser überzutreten.

Eine fünfte Ausführungsform der Befeuchtungseinheit 26 sieht vor, dass über einem Ultraschallbad erzeugte wasserhaltige Aerosol zusammen mit der zugeführten Luft in eine integrierte Verdunstungsstrecke 126 einzuleiten. Durch entsprechende Mischeinbauten in der Verdunstungsstrecke kommt es zu einer Verwirbelung des Aerosols mit der zugeführten Luft, wodurch dem zugeführten Luftstrom die zum Verdampfen der wässrigen Aerosolteilchen notwendige Verdampfungsenthalpie entzogen wird. Durch den Tropfenabscheider 118 werden eventuell verbleibende Aerosolteilchen dem befeuchteten Luftstrom entzogen. Der Abscheider 118 ist vorzugsweise so gestaltet, dass abgeschiedenes Wasser in ihm zurückgehalten wird, um mit der Zeit dennoch in den befeuchteten Luftstrom zu verdunsten. Dies ist effizient und erspart einen Wasserabfluss.

Neben den genannten Ausführungsformen der Befeuchtungseinheit 26 können weitere, dem Fachmann bereits bekannte Befeuchtungseinrichtungen in der Befeuchtungseinheit 26 realisiert werden.

Zur Regelung der erläuterten einzelnen Komponenten des Befeuchtungssystems wird die lokale Steuereinheit 22 eingesetzt. Die lokale Steuereinheit 22 erhält die vorgenannten Signale der Sensoren 100 bis 116, und steuert darüber hinaus die Leistung des Gebläses 78, der Heizer 94, 96 und 98, sowie der Befeuchtungseinheit 26 und der Pumpe 36. Dazu werden durch die lokale Steuereinheit eine lokale Temperatur und eine lokale Luftfeuchtigkeit aus den erfassten Größen der Sensoren ermittelt und auf dem mit der lokalen Steuereinheit 26 verbundenen Anzeige- und Eingabeinstrument 20 für den Passagier abrufbar dargestellt. In einer einfachen Ausführungsform besitzt das Anzeige- und Eingabeinstrument 20 Drehknöpfe, um eine gewünschte Temperatur oder relative Luftfeuchtigkeit vorzugeben. In einer bevorzugten Ausführungsform des Anzeige- und Eingabeinstruments 20 ist die Eingabe durch einen Tastschirm (nicht gezeigt) mit entsprechenden graphisch dargestellten Eingabeoptionen vorgesehen. Dabei ist die Eingabeoption ein Menüpunkt des "In-flight-entertainment"-Systems. Die vorgegebene Temperatur und relative Luftfeuchtigkeit werden von der lokalen Steuereinheit 22 mit den entsprechenden erfassten Größen verglichen. Im Falle von Abweichungen, welche ein vorgegebenes Regelintervall überschreiten, werden die angesteuerten Komponenten so geregelt, dass sie den Abweichungen entgegenwirken.

Ein weiterer Vorteil ergibt sich durch eine kombinierte Regelung von Temperatur und Luftfeuchtigkeit durch die lokale Steuereinheit 22 mit der Maßgabe einer individuellen Temperierung der Luft. Die am Anzeige- und Eingabeinstrument 20 vorgegebene Temperatur wird unter Berücksichtigung der durch die Verdunstung entzogene Verdampfungsenthalpie geregelt. Beispielsweise wird zur Verbesserung einer Energieeffizienz davon Gebrauch gemacht, dass im Zuge der Befeuchtung der Luft kühlere Luft bereitgestellt wird. Zugleich wird der Komfort der Personen weiter erhöht, denen die globale Temperatureinstellung nicht behaglich ist.

Darüber hinaus ist die lokale Steuereinheit 22 mit der Zonensteuereinheit 32 zur Datenkommunikation verbunden. Mittels der Datenkommunikation übertragen die in Fig. 1 mit Bezugszeichen 24 gekennzeichneten lokalen Steuereinheiten die erfasste lokale Temperatur zusammen mit der vorgegebenen Temperatur an die Zonensteuereinheit 32. Diese berechnet aus den erhaltenen erfassten und vorgegebenen Größen Durchschnittswerte für den gesamten Kabinenbereich 10. Die Durchschnittswerte dienen der Zonensteuereinheit 32 als Mess- bzw. Sollwerte zur Steuerung des separaten globalen Klimatisierungssystems des Kabinenbereichs 10. Durch diese Datenkommunikation wird der Energieverbrauch zur Klimatisierung des Kabinenbereichs 10 vorteilhaft optimiert unter Erhalt der individuellen Regelbarkeit.

Über ein weiteres globales Anzeige- und Eingabeinstrument (nicht gezeigt), welches einem Kabinenpersonal zugänglich ist, können globale Vorgaben für die einzelnen Sitze, insbesondere die lokale Luftfeuchtigkeit, gemacht werden. Dies ist sinnvoll da die lokale Luftfeuchtigkeit von manchen Passagieren nicht so hinreichend deutlich wahrgenommen wird, wie es für eine eigenständige Regelung erforderlich wäre. In einer vereinfachten Ausführungsform kann das lokale Anzeige- und Eingabeinstrument 20 auf eine Temperaturwahl beschränkt sein, während die lokalen Luftfeuchtigkeit vom Kabinenpersonal am globalen Anzeige- und Eingabeinstrument gewählt wird. Bei gegebener lokaler Temperatur wird dann typischerweise die Befeuchtungseinheit so gesteuert, dass an der Auslassöffnung 120 eine relative Luftfeuchtigkeit zwischen 90 und 100% erreicht wird.

Zur Justage der Auslassöffnungen 120 des Gesamtsystems (außerhalb des regulären Betriebs), kann ferner der Verschluss 122 werkzeuglos abgenommen werden. Dadurch entsteht eine Öffnung durch die Visualisierungsmittel, beispielsweise der Nebel eines Nebelgenerators, eingeleitet werden können. Die erlaubt es, das Ausströmverhalten hinter der Auslassöffnung 120 sichtbar zu machen. Zur Justage kann ein Justageprogramm in der lokalen Steuereinheit 22 aufgerufen werden, dass unterschiedliche Temperaturbereiche durchläuft. Dadurch kann die Justage auch Abweichungen im Ausströmverhalten aufgrund von thermischer Konvektion oder Dichteunterschieden zwischen Kabinenluft und Luftstrom berücksichtigen. Schließlich können durch die Nebelvisualisierung in einfacher Weise das Gelenk 124 bzw. der an dem Gelenk 124 angreifende Stellmechanismus und die zugehörige Steuerung hinsichtlich der Position des Sitzes 16 bzw. 28 justiert werden.

Ein weiterer Vorteil des beschriebenen lokalen Befeuchtungssystems 12 mit in den Sitz 16 integriertem Wassertank 62 und Gebläse 78 ist sein modularer Aufbau. Das Befeuchtungssystem ist so leicht nachträglich, beispielsweise durch Austausch einzelner Sitze, in existierenden Flugzeugen zu installieren. Zudem wird durch den modularen und integrierten Aufbau die Konfigurationsflexibilität der Kabine nicht eingeschränkt.

## Patentansprüche

1. Vorrichtung (12; 14) zur Erhöhung der Luftfeuchtigkeit in einem mit einer Vielzahl Sitze (16; 28) ausgerüsteten Kabinenbereich (10) eines Flugzeugs, umfassend
- eine Vielzahl jeweils in räumlicher Zuordnung zu jeweils einer Teilzahl der Sitze (16; 28) anordenbarer Befeuchtungseinheiten (26), welche jeweils dazu eingerichtet sind, einen zugeführten Luftstrom mit gasförmigem Wasser anzureichern,
- eine Vielzahl Auslassöffnungen (120), welche dazu eingerichtet sind, die von den Befeuchtungseinheiten (26) angereicherten Luftströme in den Kabinenbereich (10) abzugeben, wobei jeweils eine Teilzahl der Auslassöffnungen (120) je einen der angereicherten Luftströme erhält,
**gekennzeichnet durch**:
- eine Vielzahl jeweils in einem Zielbereich der lokalen Luftbefeuchtung angeordneter Temperatursensoren (112), welche dazu eingerichtet sind, eine lokale Temperatur zu erfassen, und
- eine Vielzahl erster Steuereinheiten (22), die jeweils mit einem der Temperatursensoren (112) elektrisch verbunden sind und dazu eingerichtet sind, eine Lufttemperatur (110) des angereicherten Luftstrom so einzustellen, dass die erfasste lokale Temperatur einen Taupunkt nicht unterschreitet.

2. Vorrichtung nach Anspruch 1, **dadurch gekennzeichnet, dass** zumindest ein Teil der Befeuchtungseinheiten (26) jeweils in oder an einem der Sitze (16; 28) anordenbar ist.

3. Vorrichtung nach Anspruch 1 oder 2, **dadurch gekennzeichnet, dass** zumindest ein Teil der Auslassöffnungen (120) an einem der Sitze (16; 28) oder in einer durch Konvektion einem der Sitze (16; 28) zugänglichen Umgebung anordenbar ist.

4. Vorrichtung nach einem der Ansprüche 1 bis 3, **dadurch gekennzeichnet, dass** jeweils einer Teilzahl der Befeuchtungseinheiten (26) je ein Wasserreservoir (18; 62) zugeordnet ist, aus welchem die betreffende Befeuchtungseinheit (26) Wasser zur Anreicherung ihres Luftstroms bezieht.

5. Vorrichtung nach Anspruch 4, **dadurch gekennzeichnet, dass** zumindest ein Teil der Wasserreservoire (18; 62) jeweils in oder an einem der Sitze (16; 28) vorzugsweise entnehmbar angeordnet ist.

6. Vorrichtung nach einem der Ansprüche 1 bis 5, **dadurch gekennzeichnet, dass** jeweils einer Teilzahl der Befeuchtungseinheiten (26) je ein Gebläse (78) zugeordnet ist, welches der Erzeugung des der betreffenden Befeuchtungseinheit (26) zugeführten Luftstroms dient.

7. Vorrichtung nach Anspruch 6, **dadurch gekennzeichnet, dass** zumindest ein Teil der Gebläse (78) jeweils in oder an einem der Sitze (16; 28) anordenbar ist.

8. Vorrichtung nach einem der Ansprüche 1 bis 7, **dadurch gekennzeichnet, dass** zumindest ein Teil der Auslassöffnungen (120) individuell positionierbar ist, individuell ausrichtbar ist oder insbesondere gesteuerte Stellmittel (124) vorgesehen sind, welche es gestatten, die Position oder Ausrichtung zumindest einer der Auslassöffnungen (120) automatisch einer Stellung einer Rückenlehne eines der Sitze (16; 28) anzupassen.

9. Vorrichtung nach einem der Ansprüche 1 bis 8, **gekennzeichnet durch** Heizmittel (94, 96, 98) zum Heizen wenigstens einer der folgenden Phasen: zugeführter Luftstrom, angereicherter Luftstrom und zugeführtes Wasser.

10. Vorrichtung nach Anspruch 9, **gekennzeichnet durch** Sensormittel zur Erfassung wenigstens einer der Größen Temperatur, Luftfeuchtigkeit, Durchflussrate, Druck und Sauerstoffanteil wenigstens einer der folgenden Phasen: zugeführter Luftstrom, angereicherter Luftstrom, Luftstrom an einer der Auslassöffnungen (120), zugeführtes Wasser und Luft in einer **durch** Konvektion einem der Sitze (16; 28) zugänglichen Umgebung.

11. Vorrichtung nach Anspruch 10, wobei die erste Steuereinheit (22) ferner dazu eingerichtet ist, die wenigstens eine erfasste Größe mit wenigstens einer vorgegebenen Größe zu vergleichen und Abweichungen durch Regeln zumindest einer der Befeuchtungseinheiten (26) und / oder Heizmittel (94, 96, 98) entgegenzusteuern.

12. Vorrichtung nach Anspruch 11, **dadurch gekennzeichnet, dass** die erste Steuereinheit (22) zur Datenkommunikation mit einer gesonderten zweiten Steuereinheit (32) ausgebildet ist, welche der Steuerung von Klimatisierungsmitteln zur Klimatisierung von gegenüber den angereicherten Luftströmen gesonderter, in den Kabinenbereich (10) eingeblasener Versorgungsluft dient, wobei die erste Steuereinheit (22) dazu eingerichtet ist, die wenigstens eine erfasste Größe und / oder die wenigstens eine vorgegebene Größe zu übermitteln und / oder von der zweiten Steuereinheit (32) die Klimatisierung der Versorgungsluft betreffende Mess- und / oder Sollwerte zu erhalten und die wenigstens eine vorgegebene Größe in Abhängigkeit der von der zweiten Steuereinheit (32) erhaltenen Werte zu korrigieren.

13. Vorrichtung nach einem der Ansprüche 1 bis 12, wobei eine Verdunstungsstrecke (126; 128) stromabwärts der Befeuchtungseinheit (26) Heizmittel (94, 96, 98), Mischeinbauten, Verwirbelungsflächen oder Abscheidflächen aufweist, die einem Auflösen oder Abscheiden von Aerosolteilchen dienen.

14. Vorrichtung nach einem der Ansprüche 1 bis 13, **dadurch gekennzeichnet, dass** das gasförmige Wasser in zumindest einem Teil der Befeuchtungseinheiten (26) durch wenigstens eines der folgenden Mittel gefördert wird: Ein Membranmodul, vorzugsweise ein Hohlfasermembranmodul; ein Pad-Verdunster; ein elektrisch, durch Trimmluft oder Zapfluft beheizter Verdampfer, vorzugsweise mit einer Verdampferplatte; oder ein Ultraschallverdunster.

15. vorrichtung nach einem der Ansprüche 1 bis 14, **gekennzeichnet durch** wenigstens eine Sauerstoffquelle (90) und eine stromaufwärts zumindest eines Teils der Befeuchtungseinheiten (26) angeordnete Einlassöffnung (86) zum Einblasen von Sauerstoff oder sauerstoffangereicherter Luft aus der Sauerstoffquelle (90) in den zugeführten Luftstrom.

16. Vorrichtung nach Anspruch 15, **dadurch gekennzeichnet, dass** an oder in der Nähe zumindest einer Teilzahl der Sitze jeweils wenigstens ein mit der wenigstens einen Sauerstoffquelle (90) verbundener Anschluss für medizinischen Sauerstoff angebracht ist.

## Claims

1. A device (12; 14) for increasing the air humidity in a cabin region (10) of an aircraft equipped with a plurality of seats (16; 28), comprising:
- a plurality of humidifying units (26), each of which is arrangable in each case in spatial association with a respective portion of the seats (16; 28), and which are in each case adapted to enrich a supplied air stream with gaseous water,
- a plurality of outlet openings (120), which are adapted to release the air streams enriched by the humidifying units (26) into the cabin region (10), wherein in each case a portion of the outlet openings (120) each receives one of the enriched air streams,
**characterized by**:
- a plurality of temperature sensors (112), each of which is arranged in a target region of the local air humidification, and which are adapted to detect a local temperature, and
- a plurality of first control units (22), each of which is electrically coupled to one of the temperature sensors (112) and is adapted to set an air temperature (110) of the enriched air stream so that the detected local temperature does not fall below a dew point.

2. The device according to claim 1, **characterized in that** at least some of the humidifying units (26) are in each case arrangable in or on one of the seats (16; 28).

3. The device according to claim 1 or 2, **characterized in that** at least some of the outlet openings (120) are arrangable at one of the seats (16; 28) or in a surrounding area accessible to one of the seats (16; 28) by convection.

4. The device according to any one of claims 1 to 3, **characterized in that** in each case a portion of the humidifying units (26) is assigned in each case to a water reservoir (18; 62), from which the respective humidifying unit (26) obtains water for enriching its air stream.

5. The device according to claim 4, **characterized in that** at least some of the water reservoirs (18; 62) are arranged in each case preferably removably in or on one of the seats (16; 28).

6. The device according to any one of claims 1 to 5, **characterized in that** in each case a portion of the humidifying units (26) is assigned in each case to a blower (78), which serves for generating the air stream supplied to the respective humidifying unit (26).

7. The device according to claim 6, **characterized in that** at least some of the blowers (78) are arrangable in each case in or on one of the seats (16; 28).

8. The device according to any one of the claims 1 to 7, **characterized in that** at least some of the outlet openings (120) is individually positionable, is individually orientable or, in particular, **in that** controlled activating means (124) are provided, which allow the position or orientation of at least one of the outlet openings (120) to automatically adjust to a position of a backrest of one of the seats (16; 28).

9. The device according to any one of claims 1 to 8, **characterized by** heating means (94, 96, 98) for heating at least one of the following phases: supplied air stream, enriched air stream and supplied water.

10. The device according to claim 9, **characterized by** sensor means for detecting at least one of the quantities temperature, air humidity, flow rate, pressure and oxygen content of at least one of the following phases: supplied air stream, enriched air stream, air stream at one of the outlet openings (120), supplied water and air in a surrounding area accessible to one of the seats (16; 28) by convection.

11. The device according to claim 10, wherein the first control unit (22) is further adapted to compare the at least one detected quantity to at least one preset quantity and to counteract deviations by controlling at least one of the humidifying units (26) and/or heating means (94, 96, 98).

12. The device according to claim 11, **characterized in that** the first control unit (22) is adapted for data communication with a separate second control unit (32), which serves for controlling air conditioning means for air-conditioning supply air that is separate from the enriched air streams and blown into the cabin region (10), wherein the first control unit (22) is adapted to transmit the at least one detected quantity and/or the at least one preset quantity and/or to receive from the second control unit (32) measured and/or desired values relating to the air-conditioning of the supply air and to correct the at least one preset quantity depending on the values received from the second control unit (32).

13. The device according to any one of claims 1 to 12, wherein an evaporating section (126; 128) downstream of the humidifying unit (26) includes heating means (94, 96, 98), mixing internals, swirling surfaces or precipitation surfaces, which serve for dissolving or precipitating aerosol particles.

14. The device according to any one of claims 1 to 13, **characterized in that** the gaseous water is provided in at least some of the humidifying units (26) by at least one of the following means: a membrane module, preferably a hollow-fiber membrane module; a pad evaporator; an evaporator heated electrically, heated by trim air or bleed air, preferably including an evaporator plate; or an ultrasonic evaporator.

15. The device according to any one claims 1 to 14, **characterized by** at least one oxygen source (90) and an inlet opening (86) arranged upstream of at least some of the humidifying units (26) for blowing oxygen or oxygen-enriched air from the oxygen source (90) into the supplied air stream.

16. The device according to claim 15, **characterized in that** on or in the vicinity of at least a portion of the seats (16; 28) at least one connection for medical oxygen is provided in each case, which is connected to the at least one oxygen source (90).

## Revendications

1. Dispositif (12 ; 14) pour augmenter l'humidité de l'air dans une zone de cabine d'avion (10) équipée d'un grand nombre de sièges (16 ; 28), comprenant
- un grand nombre d'unités d'humidification (26) pouvant être respectivement disposé selon une affectation spatiale respectivement à un nombre partiel de sièges (16 ; 28), lesquelles unités sont chacune conçues pour enrichir d'eau sous forme gazeuse un flux d'air arrivant,
- un grand nombre d'orifices de sortie (120) qui sont conçus pour délivrer dans ladite zone de cabine (10) des flux d'air enrichis par lesdites unités d'humidification (26), un nombre partiel desdits orifices de sortie (120) recevant respectivement un des flux d'air enrichis,
**caractérisé par**
- un grand nombre de capteurs de température (112) respectivement disposé dans une zone cible de l'humidification d'air locale, lesquels capteurs sont conçus pour détecter une température locale, et
- par un grand nombre de premières unités de commande (22) respectivement reliées électriquement à un des capteurs de température (112) et conçues pour réguler une température d'air (110) du flux d'air enrichi de manière à ce que la température locale détectée ne descende pas en dessous d'un point de rosée.

2. Dispositif selon la revendication 1, **caractérisé en ce qu'**au moins une partie des unités d'humidification (26) peut être respectivement disposée dans ou sur un des sièges (16 ; 28).

3. Dispositif selon la revendication 1 ou 2, **caractérisé en ce qu'**au moins une partie des orifices de sortie (120) peut être disposée sur un des sièges (16 ; 28) ou dans un environnement accessible par convection à un des sièges (16 ; 28).

4. Dispositif selon l'une des revendications 1 à 3, **caractérisé en ce qu'**un réservoir d'eau (18 ; 62) est affecté à chaque fois à un nombre partiel d'unités d'humidification (26), à partir duquel réservoir l'unité d'humidification (26) concernée s'alimente en eau pour enrichir son flux d'air.

5. Dispositif selon la revendication 4, **caractérisé en ce qu'**au moins une partie des réservoirs d'eau (18 ; 62) est respectivement disposée, de préférence de manière amovible, dans ou sur un des sièges (16 ; 28).

6. Dispositif selon l'une des revendications 1 à 5, **caractérisé en ce qu'**un ventilateur (78) est affecté à chaque fois à au moins un nombre partiel des unités d'humidification (26), lequel ventilateur sert à produire le flux d'air arrivant à l'unité d'humidification (26) concernée.

7. Dispositif selon la revendication 6, **caractérisé en ce qu'**au moins une partie des ventilateurs (78) peut être respectivement disposée dans ou sur un des sièges (16 ; 28).

8. Dispositif selon l'une des revendications 1 à 7, **caractérisé en ce qu'**au moins une partie des orifices de sortie (120) est individuellement positionnable et individuellement orientable, ou **en ce qu'**il est en particulier prévu des moyens de réglage permettant d'adapter automatiquement la position ou l'orientation d'au moins un des orifices de sortie (120) à une position d'un dossier d'un des sièges (16 ; 28).

9. Dispositif selon l'une des revendications 1 à 8, **caractérisé par** des moyens de chauffage (94, 96, 98) pour chauffer au moins une des phases suivantes : flux d'air arrivant, flux d'air enrichi et approvisionnement en eau.

10. Dispositif selon la revendication 9, **caractérisé par** des moyens de détection pour détecter au moins une des grandeurs, telles que la température, l'humidité de l'air, le débit d'air, la pression et la teneur en oxygène, pour au moins une des phases suivantes : flux d'air arrivant, flux d'air enrichi, flux d'air à un des orifices de sortie (120), approvisionnement en eau et air dans un environnement accessible par convection à un des sièges (16 ; 28).

11. Dispositif selon la revendication 10, la première unité de commande (22) étant en outre conçue pour comparer au moins une grandeur détectée à au moins une grandeur donnée et pour corriger tout écart par régulation au moins d'une des unités d'humification (26) et/ou des moyens de chauffage (94, 96, 98).

12. Dispositif selon la revendication 11, **caractérisé en ce que** la première unité de commande (22) est conçue pour communiquer avec une deuxième unité de commande distincte (32) servant à commander des moyens de climatisation pour climatiser par rapport aux flux d'air enrichis l'air d'alimentation distinct insufflé dans la zone de cabine (10), la première unité de commande (22) étant conçue pour transmettre au moins une grandeur détectée et/ou une des grandeurs données et/ou pour recevoir de la deuxième unité de commande (32) des valeurs de mesure et/ou des valeurs théoriques concernant la climatisation de l'air d'alimentation et pour corriger au moins une des grandeurs données en fonction des valeurs reçues par la deuxième unité de commande (32).

13. Dispositif selon l'une des revendications 1 à 12, une section d'évaporation (126 ; 128) présentant en aval de l'unité d'humidification (26) des moyens de chauffage (94, 96, 98), des installations de mélange, des surfaces de tourbillonnement ou des surfaces de séparation servant à dissoudre ou à séparer les particules d'aérosol.

14. Dispositif selon l'une des revendications 1 à 13, **caractérisé en ce que** l'eau sous forme de gaz est acheminée dans au moins une partie des unités d'humidification (26) par au moins un des moyens suivants : un module membranaire, de préférence un module à membrane en fibres creuses ; un évaporateur à pad ; un évaporateur chauffé électriquement par air de compensation ou par air soutiré, de préférence doté d'une plaque d'évaporateur ; ou un évaporateur à ultrasons.

15. Dispositif selon l'une des revendications 1 à 14, **caractérisé par** au moins une source d'oxygène (90) et un orifice d'entrée (86) disposé en amont d'au moins une partie des unités d'humidification (26) pour insuffler de l'oxygène ou de l'air enrichi d'oxygène provenant de ladite source d'oxygène (90) dans le flux d'air arrivant.

16. Dispositif selon la revendication 15, **caractérisé en ce qu'**au moins un branchement d'oxygène médical relié à au moins une source d'oxygène (90) soit respectivement placé sur ou à proximité au moins d'un nombre partiel de sièges.
